# EUROPEAN PATENT APPLICATION

(11) **EP 4 312 203 A1**
(43) Date of publication of application: **31.01.2024**
(21) Application number: 22207509.5
(22) Date of filing: 15.11.2022
(51) Int. Cl.: G09B 9/02, G09B 9/05, G09B 9/16, G09B 19/16, G09B 9/048

(54) **SYSTEM WITH HEAVY-DUTY INTERACTIVE NON-FACE-TO-FACE TRAINING PLATFORM, AND TRAINING DATA TRANSMISSION AND DRIVING EVALUATION METHOD USING THE SAME**

(30) Priority: 28.07.2022 KR 20220094281
(71) Applicant: Gubimeta Co., Ltd., Incheon 21999 (KR)
(72) Inventor: YOUNG, Shin Dae, Yeonsu-gu, Incheon 21997 (KR)
(74) Representative: Stöckeler, Ferdinand

(57) **Abstract**

An embodiment of the present disclosure provides a system with a heavy-duty interactive non-face-to-face training platform. The system with a heavy-duty interactive non-face-to-face training platform according to an embodiment of the present disclosure includes: training platform server having a training platform for virtual training of heavy equipment; a training check server that is connected to the training platform server through a network such that the training platform server can be used, includes a display so that it is possible to check training and teach a student who performs virtual heavy equipment training, and includes an interface connected to a training platform; and one or more training servers that are connected to the training platform server and the training check server through the network, include an interface so that a student who performs virtual training of heavy equipment can be trained, and are connected to the training platform.

## Description

### BACKGROUND OF THE INVENTION

### Field of the Invention

The present disclosure relates to a system with a heavy-duty interactive non-face-to-face training platform, in more detail, a system with a heavy-duty interactive non-face-to-face training platform, the system enabling non-face-to-face virtual heavy equipment training.

### Description of the Related Art

At present, aging in the construction industry in Korea is faster than other industries. Aging in a construction industry is accompanied by reduction of skillful laborers and results in reduction of productivity, and a shortage of skillful workers decreases competitiveness of the construction industry and continuously causes safety accidents.

For example, in the last decade, a total of 437 cases of accidents have occurred during work with tower cranes (by Korean Occupational Safety & Health Agency), in which 343 cases occurred in lifting (78.5%), 81 cases (18.5%) occurred in disassembly, and 13 cases (3%) occurred in maintaining, and particularly, many accidents occur in lifting.

Accordingly, there is a need for a driver training assistance system that can promote safety of drivers while maintaining productivity. As a technology related to a training assistance system, for example, there is a heavy equipment training system. As an existing heavy equipment training system, there is a technology as follows.

Korean Patent No. 10-2264045 disclosed "The Story-based VR Heavy Equipment Training System With Multi-Party Sessions, And The Method For Cooperation Synchronizing Using The Same."

Such a story-based VR heavy equipment training system with multi-party sessions in the related art includes, as main components, a plurality of simulation user devices and a simulation operating server.

The plurality of simulation user devices includes: a simulation user operation device that implements a Haptic effect of providing a user with hyper-realistic five senses in cooperation with a content service server to implement an immersive VR; a lip motion-based motion sensor device that communicates by recognizing gestures of a user; a head mounted display (HMD) device for providing a user with visual content information hyper-realistically showing an actual situation; a 3D sound speaker for 3-dimensional expression of a training situation; and a simulation server that is used as a multi-content-linked client for implementing a cooperative training situation and for synchronization of a simulation control unit, a UI/UX interaction control, and synchronization of devices.

The simulation operating server includes: a VR-based 3D immersive content that classifies a virtual reality (VR)-based 3D video into packages by giving a story and is constructed to be able to be selectively applied to fit to training models and training situations; a lip motion-based interface that can select or control training programs by recognizing gestures of a user and can interact with virtual objects in a training situation during training; an immersive Haptic effecter for transmitting a hyper-realistic training effect to a user through five senses; and a multi-content-linked client that synchronizes training situations between multiple parties by operating as a content client to support story-based training, thereby including content components for providing a user with a hyper-realized immersive media, a five-sensitive experience function, and gesture-based control, and creating sessions while controlling a cooperative training situation between multiple parties.

The simulation operating server and the plurality of simulation user devices are connected to a network through a wired/wireless router.

The simulation operating server is connected to a cooperative scenario DB storing cooperative contents and a plurality of client severs 300a-n being able to download a cooperative content from the cooperative scenario DB and joining a session in accordance with the downloaded cooperative content, whereby when an event occurs in any one of the client severs 300a-n, the simulation operating server immediately processes the event into NPC object information, provides the information to all other client servers, and transmits inter-client server content synchronization information.

Each client server interacts with a user while handling other user objects besides its user object in the same way as a non player character (NPC) object operating in a training program, and performs cooperative training in a program NPC manner with a virtual client content in the simulation operating server when one client intends to train a cooperative situation in a single content situation in which it is individually serviced with training simulation.

Such a story-based VR heavy equipment training system with multi-party sessions in the related art has an advantage that individuals can realistically perform heavy equipment training through NPC in a virtual space and can proceed with individual or cooperative training through various training contents, but it is difficult to perform training in detail while interactively communicating with a trainer and sufficiently receiving instructions or supervision from the trainer, so the system is not suitable for personal heavy equipment training.

### Citation List

### Patent Literature

Patent Literature 1: Korean Patent No. 10-2264045, "The Story-based VR Heavy Equipment Training System With Multi-party Sessions, And The Method For Cooperation Synchronizing Using The Same"

### SUMMARY OF THE INVENTION

In order to solve the problems described above, an objective of the present disclosure is to provide a system with a heavy-duty interactive non-face-to-face training platform, the system being able to perform heavy equipment training in an interactive non-face-to-face manner with detailed supervision and being able to sufficiently increase a heavy equipment training effect in comparison to the related art.

The objectives to implement in the present disclosure are not limited to the technical problems described above, and other objects that are not stated herein will be clearly understood by those skilled in the art from the following specifications.

A configuration of the present disclosure for achieving the objectives described above provides a system with a heavy-duty interactive non-face-to-face training platform, the system including a training platform server having a training platform for virtual training of heavy equipment, wherein the training platform server includes: a mechanism analysis engine that performs one or more of hydraulic circuit analysis, electrical circuit analysis, kinematic analysis, dynamic analysis, and kinematic and dynamic analysis that reproduce actual heavy equipment elements to realize mechanism operation of virtual heavy equipment elements input from the outside and generates mechanism information for digital twin operation of the virtual heavy equipment elements on the basis of the analysis; a motion data generation unit that creates motion position and posture data over time of the virtual heavy equipment elements by cooperatively operating on the basis of mechanism information of the mechanism analysis engine; and a training DB that includes training data and a training scenario according to the result of analyzing mechanism operation of the virtual heavy equipment elements by the mechanism analysis engine.

In an embodiment of the present disclosure, the system may further include: a training check server that is connected to the training platform server through a network such that the training platform server can be used, and includes an interface connected to a training platform so that it is possible to check training and instruct a student who performs virtual heavy equipment training; and one or more training servers that are connected to the training platform server and the training check server through the network, and include an interface connected to the training platform, wherein the training DB may further include a driving score of a student, a driving score of a student, and a personal history of a teacher that is input through the training check server.

In an embodiment of the present disclosure, the training check server and the training server may be connected with a plurality of operation devices for inputting actions of virtual heavy equipment elements to the interfaces, respectively, and may include one or more displays that output information of the virtual heavy equipment elements by the mechanism analysis engine and the driving score that are transmitted from the training platform server.

In an embodiment of the present disclosure, the system may further include a virtual reality realization unit that receives motion position and posture data of the virtual heavy equipment elements from the motion data generation unit on the basis of target actions of the virtual heavy equipment elements that are input through the operation devices, and has a virtual reality program that realizes a virtual reality of the heavy equipment, wherein the virtual reality realization unit may operate in cooperation with the mechanism analysis engine and the motion data generation unit.

In an embodiment of the present disclosure, the virtual reality realization unit may be configured in the training platform or configured in one or more of the training check server and the training server, and when the virtual reality realization unit is configured in one or more of the training check server and the training server, the training check server and the training server may receive the motion position and posture data from the training platform server and realize an action image of the heavy equipment that is operated in cooperation with the mechanism analysis engine.

In an embodiment of the present disclosure, the training scenario may include a training scenario database including simple action training that performs training for one operation device of the plurality of operation devices, complex action training that performs complex training for the plurality of operation devices, simple construction work training that is standardized so that a student and a teacher train while communicating, and on-site work training that frequently occurs in an actual work process in which a student and a teacher train while communicating.

In an embodiment of the present disclosure, the driving score may be a score database including a simple operation score related to the simple action training, a complex operation score related to the complex action training, a simple construction score related to the simple construction work training, and an on-site work score related to the on-side work training.

In an embodiment of the present disclosure, the training platform server may include: a score evaluation unit that evaluates and stores the driving scores; and a score correction unit that corrects the driving scores stored by the score evaluation unit by applying evaluation information on a student by a teacher.

In an embodiment of the present disclosure, the virtual heavy equipment may include one or more of a wheel excavator, a track excavator, a forklift, a wheel loader, an AT crane, a tower crane, and a boring machine.

In an embodiment of the present disclosure, the network may include: a web application firewall that connects the training check server and the training server; one or more web servers that is connected to the web application firewall; and one or more web application servers that connect the one or more web servers and the training platform server.

A configuration according to another embodiment of the present disclosure provides a training data transmission and driving evaluation method of the system with a heavy-duty interactive non-face-to-face training platform, the training data transmission and driving evaluation method includes: a step in which a student operates the operation device connected to the training server or a teacher operates the operation device connected to the training check server; a step in which operation information of the operation device is transmitted to the training platform server through the network; a step in which the mechanism analysis engine of the training platform server generates mechanism information of heavy equipment by analyzing the operation information; a step in which the motion data generation unit generations motion position and posture data over time of the virtual heavy equipment elements on the basis of the mechanism information; a step in which the virtual reality realization unit generates a series of images of the virtual heavy equipment corresponding to the motion position and posture data; and a step in which the virtual heavy equipment images and driving information are output through the display of the training check server and the training server.

In another embodiment of the present disclosure, the training data transmission and driving evaluation method may further include: a step in which the training platform server uses the virtual reality realization unit configured thereon to generate the motion position and posture data into a series of images of the virtual heavy equipment; and a step in which the training platform server transmits the series of images of the virtual heavy equipment to one or more of the training server and the training check server through the network.

In another embodiment of the present disclosure, the training data transmission and driving evaluation method may further include: a step in which the training platform server transmits the motion position and posture data to one or more of the training server and the training check server through the network; and a step in which one or more of the training server and the training check server uses the virtual reality realization unit configured thereon to generate the motion position and posture data into a series of images of the virtual heavy equipment.

In another embodiment of the present disclosure, the training data transmission and driving evaluation method may further include: a step in which the training platform server stores the operation information corresponding to one or more of the student and the teacher as a personal history of the teacher or the student; a step in which the training platform server generates a driving score by evaluating the teacher or the student on the basis of the personal history of the teacher or the student; and a step in which the image of the heavy equipment according to the operation information of the student is transmitted to the training platform server and separately realized.

In another embodiment of the present disclosure, the training data transmission and driving evaluation method may further include: a step in which any one of the training platform server and the training server transmits an action image of the virtual equipment according to the operation information of the student to the training check server; a step in which the training check server transmits evaluation information of the teacher on the action image of the virtual equipment according to the operation information of the student to the training platform server; and a step in which the training platform server corrects a driving score of the student by finally applying the evaluation information.

In another embodiment of the present disclosure, the training data transmission and driving evaluation method may further include a step in which any one of the training platform server and the training check server compares the action image of the heavy equipment according to the operation information of the student with a standard action image and then generates and transmits a corrected action image to the training server.

In another embodiment of the present disclosure, the corrected action image may be generated by the virtual reality realization unit of any one of the training platform server and the training check server on the basis of the operation information input through the operation device.

In another embodiment of the present disclosure, the training platform server may classify and store the driving score into a simple operation score related to the simple action training, a complex operation score related to the complex action training, a simple construction score related to the simple construction work training, and an on-site work score related to the on-site work training, and may transmit, together with the scores, a capacity level evaluating training skillfulness for actual work of the student on the basis of the data of the scores to the training server and the training check server.

Another configuration of the present disclosure may provide a recording medium in which an algorithm of the training data transmission and driving evaluation method of a system with a heavy-duty interactive non-face-to-face training platform is recorded.

### BRIEF DESCRIPTION OF THE DRAWINGS

FIG. 1 is a first conceptual diagram showing a system with a heavy-duty interactive non-face-to-face training platform according to an embodiment of the present disclosure, in which a virtual reality realization unit has been configured on a training platform server;
FIG. 2 is a diagram showing the training sequence of the system with a heavy-duty interactive non-face-to-face training platform according to an embodiment of the present disclosure; and
FIG. 3 is a second conceptual diagram showing a system with a heavy-duty interactive non-face-to-face training platform according to another embodiment of the present disclosure, in which a virtual reality realization unit has been configured on a training check server and a training server.

### DETAILED DESCRIPTION OF THE PREFERRED EMBODIMENTS

Hereafter, the present disclosure is described with reference to the accompanying drawings. However, the present disclosure may be modified in various different ways and is not limited to the embodiments described herein. Further, in the accompanying drawings, components irrelevant to the description will be omitted in order to clearly describe the present disclosure, and similar reference numerals will be used to describe similar components throughout the specification.

Throughout the specification, when an element is referred to as being "connected with (coupled to, combined with, in contact with)" another element, it may be "directly connected" to the other element and may also be "indirectly connected" to the other element with another element intervening therebetween. Further, unless explicitly described otherwise, "comprising" any components will be understood to imply the inclusion of other components rather than the exclusion of any other components.

The terminology used herein is for the purpose of describing particular embodiments only and is not intended to limit the present disclosure. Singular forms are intended to include plural forms unless the context clearly indicates otherwise. It will be further understood that the terms "comprise" or "have" used in this specification specify the presence of stated features, numerals, steps, operations, components, parts, or a combination thereof, but do not preclude the presence or addition of one or more other features, numerals, steps, operations, components, parts, or a combination thereof.

In the following embodiments, heavy equipment for virtual heavy equipment training may include one or more of a wheel excavator, a track excavator, a forklift, a wheel loader, an AT crane, a tower crane, and a boring machine.

Hereinafter, the present disclosure is described in detail with reference to the accompanying drawings.

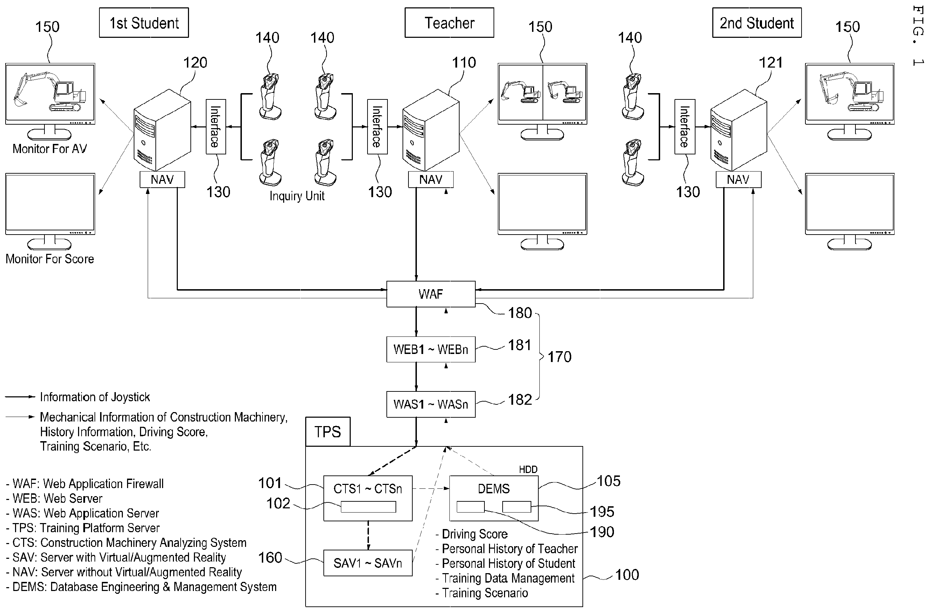

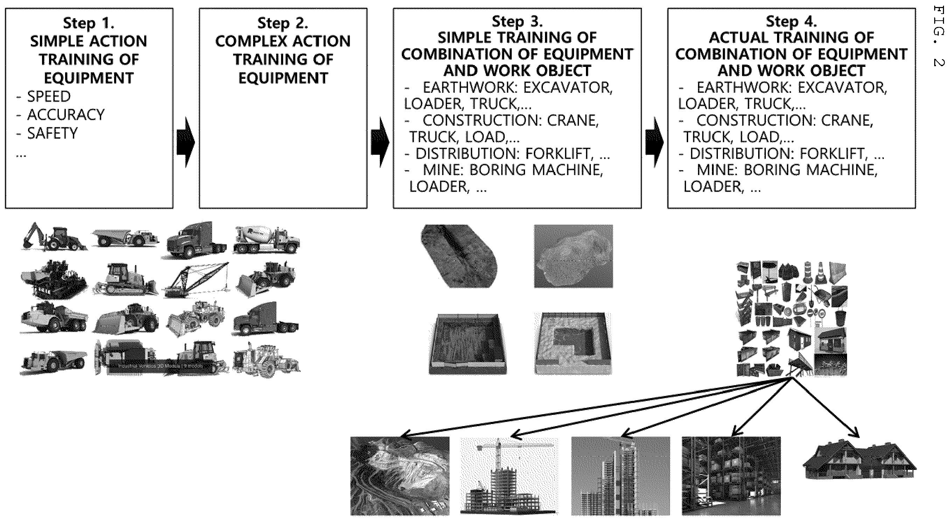

FIG. 1 is a first conceptual diagram showing a system with a heavy-duty interactive non-face-to-face training platform according to an embodiment of the present disclosure, in which a virtual reality realization unit has been configured on a training platform server, and FIG. 2 is a diagram showing the training sequence of the system with a heavy-duty interactive non-face-to-face training platform according to an embodiment of the present disclosure.

Referring to FIG. 1, a system with a heavy-duty interactive non-face-to-face training platform according to an embodiment of the present disclosure includes, as main components, a training platform server 100, a training check server 110, and training servers 120 and 121.

The training platform server 100, on which a training platform for virtual heavy equipment training is configured and operated, may be composed of several high-performance sever-level computers for high-speed data processing and operating.

The training platform configured on the training platform server 100 is software that is provided to realize mechanism operation of virtual heavy equipment elements that are input through an interface 130 and includes a database for systematic training management.

The training platform, to which a digital twin technology is applied to reproduce and perform actions according to the mechanism of actual heavy equipment, includes: a mechanism analysis engine 101 that performs one or more of hydraulic circuit analysis, electrical circuit analysis, kinematic analysis, dynamic analysis, and kinematic and dynamic analysis; a motion data generation unit 102 that generates motion position and posture data over time of virtual heavy equipment elements by cooperatively operating on the basis of mechanism information of the mechanism analysis engine 101; and a training DB 105 that includes a driving score of a student, a personal history of a teacher, a personal history of a student, training management data, and a training scenario according to the result of analyzing mechanism operation of the virtual heavy equipment elements by the mechanism analysis engine 101.

The mechanism analysis engine 101 performs one or more of hydraulic circuit analysis, electrical circuit analysis, kinematic analysis, dynamic analysis, and kinematic and dynamic analysis that reproduce actual heavy equipment elements to realize mechanism operation of virtual heavy equipment elements that is input from the outside.

In the embodiment, since the mechanism analysis engine 101 performs hydraulic circuit analysis, electrical circuit analysis, kinematic analysis, dynamic analysis, and kinematic and dynamic analysis that reproduce actual heavy equipment elements, output movement of virtual heavy equipment elements that correspond to external operation input is performed 90% or higher similar to actual heavy equipment.

The mechanism analysis engine 101 generates mechanism information for digital twin actions of virtual heavy equipment elements on the basis of the analyses described above. The mechanism analysis engine 101 has a motion data generation unit 102 that generates motion position and posture data over time of virtual heavy equipment elements cooperatively for operating virtual heavy equipment elements on the basis of mechanism information of the mechanism analysis engine 101. The motion data generation unit 102 operates in connection with a virtual reality realization unit 160 (described below) that realizes operation of virtual heavy equipment elements like actual heavy equipment elements on the basis of motion position and posture data.

The training check server 110, which is a computer that a teacher who checks training situation and result of a heavy equipment student and supervises and teaches the heavy equipment student, is connected to the training platform server 100 through a network 170 so that it is possible to connect with the training platform server 100 and use a training platform, and includes an interface 130 connected to a training platform so that it is possible to check training and teach a student who performs virtual heavy equipment training.

The training servers 120 and 121, which are computers that a heavy equipment student connects with to train, is connected to the training platform server 100 and the training check server 110 through the network 170 and includes an interface 130 connected to the training platform so that a student who performs virtual heavy equipment training can train.

The training check server 110 and the training servers 120 and 121 are connected with a plurality of operation devices 140 for inputting actions of virtual heavy equipment elements to the interfaces 130, and include one or more displays 150 that output mechanism of virtual heavy equipment elements by the mechanism analysis engine 101and a driving score. The operation devices 140 may be achieved by reproducing a work environment of actual heavy equipment such as a joystick having buttons for performing various actions and a pedal.

First, according to an embodiment of the present disclosure, the virtual reality realization unit 160 may be selectively configured on the training platform server 100. The virtual reality realization unit 160 may be configured to store a virtual reality program therein that realizes a virtual reality of heavy equipment by an operation device 140 into an image, and to dynamically execute the program. The virtual reality realization unit 160 operates in cooperation with the motion data generation unit 102 that generates motion position and posture data over time of virtual heavy equipment elements for operating virtual heavy equipment elements.

As in FIG. 1, since the virtual reality realization unit (SAV) 160 is configured on the training platform server 100, the load of data and operational processing of the training check server 110 and the training servers 120 and 121 decreases. Accordingly, the training check server 110 and the training servers 120 and 121 can be computers with low specifications.

As in FIG. 1, when the virtual reality realization unit 160 is configured on the training platform server 100, the training check server 110 and the training servers 120 and 121 are not provided with the virtual reality realization unit 160, and receive action image data from the training platform server 100 and transmit the action image data to the displays 150.

In this case, large-size image data are transmitted/received between the training platform server 100, the training check server 110, and the training servers 120 and 121, so when a data load acts and the speed of a communication line is poor, the realization of action images of virtual heavy equipment at a remote place may be slow.

The network 170 may include a web application firewall 180 that connects the training check server 110 and the training servers 120 and 121 to each other, one or more web servers 181 that is connected to the web application firewall 180, and one or more web application servers 182 that connect the one or more web servers 181 and the training platform server 100 to each other. In this configuration, when the network 170 is used to only transmit image data, the multiple firewall 180 may be simplified or omitted.

The network 170 includes a plurality of firewalls preventing external invasion and exposure of data in bidirectional transmission of data, thereby being able to protect a training platform.

Meanwhile, further referring to FIGS. 1 and 2, the training scenario of the training DB 105 is a training scenario database including simple action training that performs training for one operation device 140 of the plurality of operation devices 140, complex action training that performs complex training for the plurality of operation devices 140, simple construction work training that is standardized so that a student and a teacher train while communicating, and on-site work training that frequently occurs in an actual work process in which a student and a teacher train while communicating.

The driving score may be a score database including a simple operation score related to the simple action training, a complex operation score related to the complex action training, a simple construction score related to the simple construction work training, and an on-site work score related to the on-site work training. The driving score can be calculated by a score evaluation unit 190 and a score correction unit 195 that are operated in cooperation with each other in the training DB 105.

That is, the training platform server 100 may include a score evaluation unit 190 that evaluates and stores driving scores, and a score correction unit 195 that corrects the driving scores stored in the score evaluation unit 190 by applying evaluation information about students by teachers.

As evaluation items of the score evaluation unit190, work time, work accuracy, a depth, an overlay, a fuel efficiency, shock, bucket movement, an operation device movement, etc. may be included in the score evaluation unit 190.

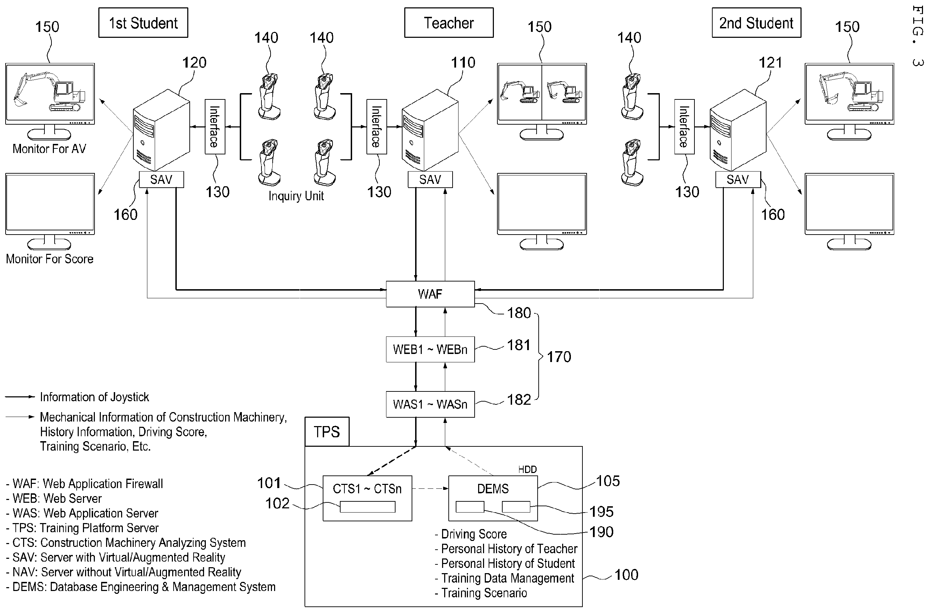

FIG. 3 is a second conceptual diagram showing a system with a heavy-duty interactive non-face-to-face training platform according to another embodiment of the present disclosure, in which a virtual reality realization unit has been configured on a training check server and a training server.

Referring to FIG. 3, according to another embodiment of the present disclosure, the virtual reality realization unit (SAV) 160 may be configured on only the training check server 110 and the training servers 120 and 121.

The virtual reality realization unit 160 may also be configured to store a virtual reality program therein that realizes a virtual reality of heavy equipment by an operation device 140 into a dynamic image, and to execute the program. The virtual reality realization unit 160 may be operated in cooperation with the mechanism analysis engine 101.

The virtual reality realization unit 160 is connected to and operated in cooperation with the motion data generation unit 102 that generates motion position and posture data over time of virtual heavy equipment elements for operating virtual heavy equipment elements through a network.

That is, motion position and posture data generated by the motion data generation unit 102 are transmitted to the virtual reality realization unit 160 at a remote place through a network, and the virtual reality realization units 160 of the training check server 110 and the training servers 120 and 121 realize operation of virtual heavy equipment elements on the basis of the motion position and posture data.

This is the case in which motion data over time are transmitted from the training platform server 100 to the training check server 110 and the training servers 120 and 121, in which data for realizing dynamic images of virtual heavy equipment elements can be transmitted smoothly without being greatly influenced by the transmission speed of the network.

Actually, the training platform server 100 may be operated at a considerably remote place from the training check server 110 and the training servers 120 and 121, and the training check server 110 and the training servers 120 and 121 have only the virtual reality realization unit 160, that is software, configured thereon such that training and teaching of heavy equipment are possible. The virtual reality realization unit 160 may be provided to a student or a teacher through a virtual reality application that can be downloaded from the training platform server 100, or a recording medium.

The web application firewall 180, the web server 181, and the web application server 182 of the network 170 may be configured in the same way as those described above.

The training scenario of the training DB 105, the score evaluation unit 190, and the score correction unit 197 may be applied in the same way as those described above.

Hereafter, a training data transmission and driving evaluation method of the system with a heavy-duty interactive non-face-to-face training platform according to embodiments of the present disclosure is described.

Referring to FIGS. 1 to 3, a training data transmission and driving evaluation method of the system with a heavy-duty interactive non-face-to-face training platform according to embodiments of the present disclosure, which provides virtual training of heavy equipment using the system with a heavy-duty interactive non-face-to-face training platform, includes: a step in which a student operates the operation device 140 connected to the training servers 120 and 121 or a teacher operates the operation device 140 connected to the training check server 110; a step in which operation information of the operation device 140 is transmitted to the training platform server 100 through the network 170; a step in which the mechanism analysis engine 101 of the training platform server 100 generates mechanism information of heavy equipment by analyzing the operation information; a step in which the motion data generation unit 102 cooperatively operating on the basis of the mechanism analysis engine 101 generates motion position and posture data over time of virtual heavy equipment elements for operating the virtual heavy equipment elements; a step in which the training platform server 100 generates an image of the virtual heavy equipment according to information about the motion position and posture data or mechanism information and transmits the image to one or more of the training servers 120 and 121 and the training check server 110 through the network 170; a step in which the image of the virtual heavy equipment according to the mechanism information is realized in one or more of the training servers 120 and 121 and the training check server 110; and a step in which mechanisms of the heavy equipment elements and a training score are output through the displays 150 of the training check server 110 and the training servers 120 and 121.

As in FIG. 1 described above, when the virtual reality realization unit 160 according to an embodiment is configured on the training platform server 100, the training check server 110 and the training servers 120 and 121 are not provided with the virtual reality realization unit 160, and receive action image data and transmit the action image data to the displays 150.

The training data transmission and driving evaluation method according to an embodiment of the present disclosure may further include: a step in which the training platform server 100 stores operation information, which corresponds to one or more of the student and the teacher, as a personal history of the teacher or the student; a step in which the training platform server 100 generates a driving score by evaluating the teacher or the student on the basis of the personal history data of the teacher or the student; and a step in which the image of the heavy equipment according to the operation information of the student is transmitted to the training platform server 100 and separately realized.

The training data transmission and driving evaluation method according to an embodiment of the present disclosure may further include: a step in which any one of the training platform server 100 and the training servers 120 and 121 transmits an action image of the virtual equipment according to the operation information of the student to the training check server 110; a step in which the training check server 110 transmits evaluation information of the teacher on the action image of the virtual equipment according to the operation information of the student to the training platform server 100; and a step in which the training platform server 100 corrects the driving score of the student by finally applying the evaluation information.

The training data transmission and driving evaluation method according to an embodiment of the present disclosure may further include a step in which any one of the training platform server 100 and the training check server 110 compares the action image of the heavy equipment according to the operation information of the student with a standard action image and then generates and transmits a corrected action image to the training servers 120 and 121.

The corrected action image may be generated through the virtual reality realization unit 160 of any one of the training platform server 100 and the training check server 110 on the basis of the operation information input through the operation device. In this case, the virtual reality realization unit 160 of the training platform server 100 is used.

Meanwhile, referring to FIGS. 1 and 2, the training platform server 100 can classify and store the driving score into a simple operation score related to the simple action training, a complex operation score related to the complex action training, a simple construction score related to the simple construction work training, and an on-site work score related to the on-site work training, and can transmit, together with the scores, a capacity level evaluating training skillfulness for actual work of the student on the basis of the data of the scores to the training servers 120 and 121 and the training check server 110.

Referring to FIG. 3, according to another embodiment of the present disclosure described above, the virtual reality realization unit 160 may be configured on only the training check server 110 and the training servers 120 and 121. In this case, the virtual reality realization unit 160 is operated in cooperation with the motion data generation unit 102 that generates motion position and posture data over time of virtual heavy equipment elements for operating virtual heavy equipment elements.

That is, motion position and posture data generated by the motion data generation unit 102 are transmitted to the virtual reality realization unit 160 at a remote place through a network, and the virtual reality realization units 160 of the training check server 110 and the training servers 120 and 121 realize operation of virtual heavy equipment elements on the basis of the motion position and posture data.

This is the case in which motion data over time are transmitted from the training platform server 100 to the training check server 110 and the training servers 120 and 121, in which data for realizing dynamic images of virtual heavy equipment elements can be transmitted smoothly without being greatly influenced by the transmission speed of the network.

According to another embodiment of the present disclosure, it is possible to provide a recording medium in which an algorithm of the training data transmission and driving evaluation method of a system with a heavy-duty interactive non-face-to-face training platform is recorded.

For example, the recording media includes magnetic media such as hard disks, floppy disks, and a magnetic tape, optical media such as CD-ROMs and DVDs, magnetooptical media such as floptical disks, and hardware devices specifically configured to store and execute program commands such as ROM, RAM, and flash memory.

The program commands include not only machine languages compiled by a compiler, but also high-level languages that can be executed by a computer using an interpreter, etc. The hardware device may be configured to operate as one or more software modules to perform the operation of the present disclosure, and vice versa.

As described above, the present disclosure may be implemented by computer-readable codes in a computer-readable recording medium. A computer-readable recording medium includes all kinds of recording devices that store data that can be read by a computer system. Examples of the computer-readable recording medium include a ROM, a RAM, a CD-ROM, a magnetic tape, a floppy disc, an optical data storage device, etc. It may be implemented in a carrier wave type (e.g., transmission through the internet), but also may be distributed to computer systems connected through a network such that computer-readable codes are stored and executed in a distribution manner. Further, functional programs, codes, and code segments for implementing the present disclosure may be easily inferred by programmers in the art.

The above description is provided as an exemplary embodiment of the present disclosure, and it should be understood that the present disclosure can be easily modified in other various ways without changing the spirit or the necessary features of the present disclosure by those skilled in the art. Therefore, the embodiments described above are only examples and should not be construed as being limitative in all respects. For example, the components described as a single part may be divided and the components described as separate parts may be integrated.

An effect of the present disclosure having the configurations described above can provide a system with a heavy-duty interactive non-face-to-face training platform, the system being able to perform heavy equipment training in an interactive non-face-to-face manner with detailed supervision and being able to sufficiently increase a heavy equipment training effect in comparison to the related art.

The effects of the present disclosure are not limited thereto, and it should be understood that the effects include all effects that can be inferred from the configuration of the present disclosure described in the following specification or claims.

The scope of the present disclosure is defined by the following claims, and all of changes and modifications obtained from the meaning and range of claims and equivalent concepts should be construed as being included in the scope of the present disclosure.

## Claims

1. A system with a heavy-duty interactive non-face-to-face training platform, the system comprising
a training platform server including a training platform for virtual training of heavy equipment,
wherein the training platform server includes:
a mechanism analysis engine that performs one or more of hydraulic circuit analysis, electrical circuit analysis, kinematic analysis, dynamic analysis, and kinematic and dynamic analysis that reproduce actual heavy equipment elements to realize mechanism operation of virtual heavy equipment elements input from the outside, and generates mechanism information for digital twin operation of the virtual heavy equipment elements on the basis of the analysis;
a motion data generation unit that generates motion position and posture data over time of the virtual heavy equipment elements for operating the virtual heavy equipment elements by cooperatively operating on the basis of mechanism information of the mechanism analysis engine; and
a training DB that includes training data and a training scenario according to the result of analyzing mechanism operation of the virtual heavy equipment elements by the mechanism analysis engine.

2. The system of claim 1, further comprising:
a training check server that is connected to the training platform server through a network such that the training platform server can be used, and includes an interface connected to a training platform so that it is possible to check training and teach a student who performs virtual heavy equipment training; and
one or more training servers that are connected to the training platform server and the training check server through the network, and include an interface connected to the training platform,
wherein the training DB further includes a driving score of a student, a personal history of a student, and a personal history of a teacher that is input through the training check server.

3. The system of claim 2, wherein the training check server and the training server are connected with a plurality of operation devices for inputting actions of virtual heavy equipment elements to the interfaces, respectively, and include one or more displays that output information of the virtual heavy equipment elements and the driving score by the mechanism analysis engine that are transmitted from the training platform server.

4. The system of claim 3, further comprising a virtual reality realization unit that receives motion position and posture data of the virtual heavy equipment elements from the motion data generation unit on the basis of target actions of the virtual heavy equipment elements that are input through the operation devices, and has a virtual reality program that realizes a virtual reality of the heavy equipment,
wherein the virtual reality realization unit operates in cooperation with the mechanism analysis engine and the motion data generation unit.

5. The system of claim 4, wherein the virtual reality realization unit is configured on the training platform or configured on one or more of the training check server and the training server, and
when the virtual reality realization unit is configured on one or more of the training check server and the training server, the training check server and the training server receive the motion position and posture data from the training platform server and realize an action image of the heavy equipment that is operated in cooperation with the mechanism analysis engine.

6. The system of claim 4, wherein the training scenario includes a training scenario database including simple action training that performs training for one operation device of the plurality of operation devices, complex action training that performs complex training for the plurality of operation devices, simple construction work training that is standardized so that a student and a teacher train while communicating, and on-site work training that frequently occurs in an actual work process in which a student and a teacher train while communicating.

7. The system of claim 6, wherein the driving score is a score database including:
a simple operation score related to the simple action training;
a complex operation score related to the complex action training;
a simple construction score related to the simple construction work training; and
an on-site work score related to the on-site work training.

8. The system of claim 4, wherein the training platform server includes:
a score evaluation unit that evaluates and stores the driving scores; and
a score correction unit that corrects the driving scores stored by the score evaluation unit by applying evaluation information on a student by a teacher.

9. The system of claim 1, wherein the virtual heavy equipment includes one or more of a wheel excavator, a track excavator, a forklift, a wheel loader, an AT crane, a tower crane, and a boring machine.

10. The system of claim 1, wherein the network includes:
a web application firewall that connects the training check server and the training server;
one or more web servers that is connected to the web application firewall; and
one or more web application servers that connect the one or more web servers and the training platform server.

11. A training data transmission and driving evaluation method of the system with a heavy-duty interactive non-face-to-face training platform of claim 4, the training data transmission and driving evaluation method comprising:
a step in which a student operates the operation device connected to the training server or a teacher operates the operation device connected to the training check server;
a step in which operation information of the operation device is transmitted to the training platform server through the network;
a step in which the mechanism analysis engine of the training platform server generates mechanism information of heavy equipment by analyzing the operation information;
a step in which the motion data generation unit generates motion position and posture data over time of the virtual heavy equipment elements on the basis of the mechanism information;
a step in which the virtual reality realization unit generates a series of images of the virtual heavy equipment corresponding to the motion position and posture data; and
a step in which the virtual heavy equipment images and driving information are output through the display of the training check server and the training server.

12. The training data transmission and driving evaluation method of claim 11, further comprising:
a step in which the training platform server uses the virtual reality realization unit configured thereon to generate the motion position and posture data into a series of images of the virtual heavy equipment; and
a step in which the training platform server transmits the series of images of the virtual heavy equipment to one or more of the training server and the training check server through the network.

13. The training data transmission and driving evaluation method of claim 11, further comprising:
a step in which the training platform server transmits the motion position and posture data to one or more of the training server and the training check server through the network; and
a step in which one or more of the training server and the training check server uses the virtual reality realization unit configured thereon to generate the motion position and posture data into a series of images of the virtual heavy equipment.

14. The training data transmission and driving evaluation method of claim 11, further comprising:
a step in which the training platform server stores the operation information corresponding to one or more of the student and the teacher as a personal history of the teacher or the student;
a step in which the training platform server generates a driving score by evaluating the teacher or the student on the basis of the personal history of the teacher or the student; and
a step in which the image of the heavy equipment according to the operation information of the student is transmitted to the training platform server and separately realized.

15. The training data transmission and driving evaluation method of claim 11, further comprising:
A step in which any one of the training platform server and the training server generates and transmits an action image of the virtual equipment according to the operation information of the student to the training check server;
a step in which the training check server transmits evaluation information of the teacher on the action image of the virtual equipment according to the operation information of the student to the training platform server; and
a step in which the training platform server corrects a driving score of the student by finally applying the evaluation information.

16. The training data transmission and driving evaluation method of claim 15, further comprising a step in which any one of the training platform server and the training check server compares the action image of the heavy equipment according to the operation information of the student with a standard action image and then generates and transmits a corrected action image to the training server.

17. The training data transmission and driving evaluation method of claim 16, wherein the corrected action image is generated by the virtual reality realization unit of any one of the training platform server and the training check server on the basis of the operation information input through the operation device.

18. The training data transmission and driving evaluation method of claim 11, wherein the training platform server classifies and stores the driving score into a simple operation score related to the simple action training, a complex operation score related to the complex action training, a simple construction score related to the simple construction work training, and an on-site work score related to the on-site work training, and
transmits, together with the scores, a capacity level evaluating training skillfulness for actual work of the student on the basis of the data of the scores to the training server and the training check server.

19. A recording medium in which an algorithm of the training data transmission and driving evaluation method of the system with a heavy-duty interactive non-face-to-face training platform is recorded.

## Amended claims

### Amended claims in accordance with Rule 137(2) EPC.

1. A system with a heavy-duty interactive non-face-to-face training platform, the system comprising
a training platform server (100) including a training platform for virtual training of heavy equipment,
wherein the training platform server (100) includes:
a mechanism analysis engine (101) that performs one or more of hydraulic circuit analysis, electrical circuit analysis, kinematic analysis, dynamic analysis, and kinematic and dynamic analysis that reproduce actual heavy equipment elements to realize mechanism operation of virtual heavy equipment elements input from the outside, and generates mechanism information for digital twin operation of the virtual heavy equipment elements on the basis of the analysis;
a motion data generation unit (102) that generates motion position and posture data over time of the virtual heavy equipment elements for operating the virtual heavy equipment elements by cooperatively operating on the basis of mechanism information of the mechanism analysis engine (101);
a training DB (105) that includes training data and a training scenario according to the result of analyzing mechanism operation of the virtual heavy equipment elements by the mechanism analysis engine (101);
a training check server (110) that is connected to the training platform server (100) through a network such that the training platform server (100) can be used, and includes an interface (130) connected to a training platform so that it is possible to check training and teach a student who performs virtual heavy equipment training; and
one or more training servers (120, 121) that are connected to the training platform server (100) and the training check server (110) through the network, and include an interface (130) connected to the training platform,
wherein the training DB (105) further includes a driving score of a student, a personal history of a student, and a personal history of a teacher that is input through the training check server (110); wherein the training check server (110) and the training server (120, 121) are connected with a plurality of operation devices (140) for inputting actions of virtual heavy equipment elements to the interfaces (130), respectively, and include one or more displays (150) that output information of the virtual heavy equipment elements and the driving score by the mechanism analysis engine (101) that are transmitted from the training platform server;
wherein the system further comprises
a virtual reality realization unit (160) that receives motion position and posture data of the virtual heavy equipment elements from the motion data generation unit (102) on the basis of target actions of the virtual heavy equipment elements that are input through the operation devices (140), and has a virtual reality program that realizes a virtual reality of the heavy equipment,
wherein the virtual reality realization unit (160) operates in cooperation with the mechanism analysis engine (101) and the motion data generation unit (102)wherein the virtual reality realization unit (160) is configured on the training platform server.

2. The system of claim 1, wherein the training scenario includes a training scenario database including simple action training that performs training for one operation device of the plurality of operation devices (140), complex action training that performs complex training for the plurality of operation devices (140), simple construction work training that is standardized so that a student and a teacher train while communicating, and on-site work training that frequently occurs in an actual work process in which a student and a teacher train while communicating.

3. The system of claim 2, wherein the driving score is a score database including:
a simple operation score related to the simple action training;
a complex operation score related to the complex action training;
a simple construction score related to the simple construction work training; and
an on-site work score related to the on-site work training.

4. The system of claim 1, wherein the training platform server (100) includes:
a score evaluation unit (190) that evaluates and stores the driving scores; and
a score correction unit (197) that corrects the driving scores stored by the score evaluation unit (190) by applying evaluation information on a student by a teacher.

5. The system of claim 1, wherein the virtual heavy equipment includes one or more of a wheel excavator, a track excavator, a forklift, a wheel loader, an AT crane, a tower crane, and a boring machine.

6. The system of claim 1, wherein the network includes:
a web application firewall (180) that connects the training check server (110) and the training server (120, 121);
one or more web servers that is connected to the web application firewall (180); and
one or more web application servers (182) that connect the one or more web servers and the training platform server (100).

7. A training data transmission and driving evaluation method of the system with a heavy-duty interactive non-face-to-face training platform of claim 1, the training data transmission and driving evaluation method comprising:
a step in which a student operates the operation device (140) connected to the training server (120, 121) or a teacher operates the operation device (140) connected to the training check server (110);
a step in which operation information of the operation device (140) is transmitted to the training platform server (100) through the network;
a step in which the mechanism analysis engine (101) of the training platform server (100) generates mechanism information of heavy equipment by analyzing the operation information;
a step in which the motion data generation unit (102) generates motion position and posture data over time of the virtual heavy equipment elements on the basis of the mechanism information;
a step in which the virtual reality realization unit (160) generates a series of images of the virtual heavy equipment corresponding to the motion position and posture data;
a step in which the virtual heavy equipment images and driving information are output through the display (150) of the training check server (110) and the training server (120, 121); and
a step in which the training platform server (100) uses the virtual reality realization unit (160) configured thereon to generate the motion position and posture data into a series of images of the virtual heavy equipment; and
a step in which the training platform server (100) transmits the series of images of the virtual heavy equipment to one or more of the training server (120, 121) and the training check server (110) through the network.

8. The training data transmission and driving evaluation method of claim 7, further comprising:
a step in which the training platform server (100) stores the operation information corresponding to one or more of the student and the teacher as a personal history of the teacher or the student;
a step in which the training platform server (100) generates a driving score by evaluating the teacher or the student on the basis of the personal history of the teacher or the student; and
a step in which the image of the heavy equipment according to the operation information of the student is transmitted to the training platform server (100) and separately realized.

9. The training data transmission and driving evaluation method of claim 7, further comprising:
A step in which any one of the training platform server (100) and the training server (120, 121) generates and transmits an action image of the virtual equipment according to the operation information of the student to the training check server (110);
a step in which the training check server (110) transmits evaluation information of the teacher on the action image of the virtual equipment according to the operation information of the student to the training platform server; and
a step in which the training platform server (100) corrects a driving score of the student by finally applying the evaluation information.

10. The training data transmission and driving evaluation method of claim 9, further comprising a step in which any one of the training platform server (100) and the training check server (110) compares the action image of the heavy equipment according to the operation information of the student with a standard action image and then generates and transmits a corrected action image to the training server (120, 121).

11. The training data transmission and driving evaluation method of claim 10, wherein the corrected action image is generated by the virtual reality realization unit (160) of any one of the training platform server (100) and the training check server (110) on the basis of the operation information input through the operation device (140).

12. The training data transmission and driving evaluation method of claim 7, wherein the training platform server (100) classifies and stores the driving score into a simple operation score related to the simple action training, a complex operation score related to the complex action training, a simple construction score related to the simple construction work training, and an on-site work score related to the on-site work training, and
transmits, together with the scores, a capacity level evaluating training skillfulness for actual work of the student on the basis of the data of the scores to the training server (120, 121) and the training check server (110) .

13. A recording medium in which an algorithm of the training data transmission and driving evaluation method of the system with a heavy-duty interactive non-face-to-face training platform according to claim 7 is recorded.
